# EUROPÄISCHE PATENTSCHRIFT

(11) **EP 4 082 323 B1**
(45) Veröffentlichungstag und Bekanntmachung des Hinweises auf die Patenterteilung: **29.07.2026**
(21) Anmeldenummer: 21214229.3
(22) Anmeldetag: 14.12.2021
(51) Int. Cl.: A01D 41/12, F01P 11/12, F01P 11/06, B01D 46/26, B01D 46/682, F01P 3/20

(54) **SIEBEINRICHTUNG MIT ZUMINDEST EINER ABSAUGDÜSE**
SCREENING DEVICE WITH AT LEAST ONE SUCTION NOZZLE
DISPOSITIF TAMIS POURVU D'AU MOINS UNE BUSE D'ASPIRATION

(30) Priorität: 30.04.2021 DE 102021111281
(43) Veröffentlichungstag der Anmeldung: 02.11.2022
(73) Patentinhaber: CLAAS Selbstfahrende Erntemaschinen GmbH, 33428 Harsewinkel (DE)
(72) Erfinder: Topmöller, Philipp, 33442 Herzebrock-Clarholz (DE); Tiggemann, Thomas, 59320 Ennigerloh-Ostenfelde (DE); Koitzsch, Roger Helmut, 33640 Bielefeld (DE); Vorwerk, Norbert, 49078 Osnabrück (DE)
(74) Vertreter: CLAAS Gruppe

(56) Entgegenhaltungen:
- EP-A1- 3 650 103
- EP-A2- 3 696 385
- US-A1- 2010 006 361
- US-A1- 2017 107 893

## Beschreibung

Die vorliegende Erfindung betrifft eine Siebeinrichtung mit zumindest einer Absaugdüse gemäß dem Oberbegriff des Anspruches 1. Weiterhin betrifft die vorliegende Erfindung eine selbstfahrende Erntemaschine gemäß dem Oberbegriff des Anspruches 15.

Eine Siebeinrichtung mit zumindest einer Absaugdüse kommt an Kühlereinrichtungen von selbstfahrenden Erntemaschinen zum Einsatz, um zu verhindern, dass durch ein Gebläse der Kühlereinrichtung angesaugte Fremdkörper wie beispielsweise Spreu, Lieschenblätter und dergleichen sowie sonstige Schmutzpartikel mit dem Kühlluftstrom einer zu kühlenden Antriebseinheit der selbstfahrenden Erntemaschine zugeführt werden, wodurch die Gefahr eines Brandes besteht. Ein Sieb der Siebeinrichtung ist durch den von dem Gebläse Kühlluftstrom durchströmt, wobei darin enthaltene Fremdkörper und Schmutzpartikel sich auf der Oberfläche des Siebes ablagern. Diese Fremdkörper und Schmutzpartikel werden von der Oberfläche des Siebes durch die Absaugdüse, die eine dem Sieb zugewandte Absaugöffnung aufweist und mit einer Unterdruckquelle verbunden ist, abgesaugt. Der Anschluss für die Unterdruckquelle befindet sich in der Regel an einem äußeren Ende der Absaugdüse, so dass die Saugleistung der Unterdruckquelle in Längsrichtung der Absaugdüse kontinuierlich abnimmt. Bei einem rotierend angetriebenen Sieb oder einer relativ zum Sieb rotierenden Absaugdüse erfolgt das Entfernen von Schmutz in radialer Richtung ungleichmäßig. Das distale Ende der Absaugdüse muss eine größere Oberfläche überfahren und viel mehr Schmutz entfernen als das proximale Ende der Absaugdüse, das näher an einer zentralen Nabe und dem Anschluss der Absaugdüse an die Unterdruckquelle liegt. Somit wird die Leistung an dem distalen Ende der Absaugdüse aufgrund der relativ höheren Geschwindigkeit und damit kürzeren Verweildauer des distalen Endes der Absaugdüse im Vergleich zu der relativ niedrigeren Oberflächengeschwindigkeit nahe der Mitte der Absaugdüse verringert.

Eine Siebeinrichtung mit einer Absaugdüse der vorstehend genannten Art ist aus der EP 3 149 305 B1 bekannt. Zur Vergleichmäßigung der Saugleistung ist gemäß der EP 3 149 305 B1 vorgesehen, die Absaugdüse mit mehreren Schlitzöffnungen auszuführen, die durch einen gemeinsamen Luftkanal in der einen Hohlkörper aufweisenden Absaugdüse fluidleitend miteinander verbunden sind. Die Schlitzöffnungen sind in Längsrichtung der Absaugdüse mit unterschiedlichem Abstand zueinander verteilt angeordnet. Eine gattungsgemäße Siebeinrichtung ist auch aus der US 2017/107893 A1 bekannt.

Ausgehend von dem vorstehend genannten Stand der Technik liegt der Erfindung die Aufgabe zugrunde, eine Siebeinrichtung mit zumindest einer Absaugdüse der eingangs genannten Art weiterzubilden, die sich durch eine verbesserte Saugleistung im zum Anschluss distalen Bereich der Absaugdüse auszeichnet.

Diese Aufgabe wird durch eine Siebeinrichtung ausgehend vom Oberbegriff des Anspruches 1 in Verbindung mit den kennzeichnenden Merkmalen des Anspruches 1 gelöst. Vorteilhafte Weiterbildungen der Erfindung sind Gegenstand der Unteransprüche.

Gemäß dem Anspruch 1 wird eine Siebeinrichtung mit zumindest einer Absaugdüse vorgeschlagen, welche einen länglichen Hohlkörper mit zumindest einer Absaugöffnung, die sich abschnittsweise in Längsrichtung und Querrichtung des Hohlkörpers erstreckt und durch zumindest einen Luftkanal im Inneren des Hohlkörpers mit einem an dem Hohlkörper angeordneten Anschluss zur Verbindung mit einer Unterdruckquelle verbunden ist, aufweist, wobei die zumindest eine Absaugöffnung einem Sieb der Siebeinrichtung zugewandt angeordnet ist. Erfindungsgemäß ist vorgesehen, dass der zumindest eine Luftkanal ausgehend von einem äußeren Ende der Absaugdüse in Richtung des Anschlusses einen in Hochrichtung zunehmenden Querschnittsverlauf aufweist, wobei eine der zumindest einen Absaugöffnung zugewandte Innenkontur des zumindest einen Luftkanals eine im Wesentlichen einem Tragflächenprofil entsprechende Kontur aufweist.

Die einem Tragflächenprofil entsprechende Innenkontur führt zu einer Variation des von einem Absaugluftstrom durchströmten Querschnitts im Inneren der Absaugdüse, so dass bei einem vorgegebenen Absaugluftvolumenstrom in einem zum Anschluss weiter beabstandeten Abschnitt der zumindest einen Absaugöffnung eine Erhöhung der Strömungsgeschwindigkeit des Absaugluftstroms bewirkt wird. Durch die einem Tragflächenprofil entsprechende Gestaltung der Innenkontur in Verbindung mit dem sich ändernden Querschnittsverlauf des zumindest einen Luftkanals im Inneren des Hohlkörpers wird mit zunehmendem Abstand zum Anschluss eine Erhöhung der Strömungsgeschwindigkeit des Absaugluftstroms erreicht, welche am dem äußeren Ende der Absaugdüse zugewandten Ende der Absaugöffnung ihren Höchstwert aufweist. Hierdurch wird die Absauggeschwindigkeit im distalen Bereich der Absaugdüse erhöht, wodurch das Ablösen von Anhaftungen an dem Sieb der Siebeinrichtung verbessert wird. Durch die verbesserte Siebeinrichtung wird eine Erhöhung der Funktionssicherheit bei der Absaugung erreicht.

Durch die effizientere Absaugung mittels der erfindungsgemäß ausgestalteten Absaugdüse kann gegenüber einer Absaugdüse gemäß dem Stand der Technik ein von der Unterdruckquelle notwendigerweise geförderter Volumenstrom zumindest konstant gehalten oder sogar reduziert werden.

Bevorzugt kann die Innenkontur des zumindest einen Luftkanals ausgehend von dem Anschluss zunächst einen ersten Bereich mit einem abschnittsweise konvexen Verlauf aufweisen, der in einen zweiten Bereich mit einem abschnittsweise konkaven Verlauf übergeht und zu dem äußeren Ende des Hohlkörpers hin in einen dritten Bereich mit einem konvexen Verlauf übergeht. Durch diesen Verlauf der Innenkontur nimmt die Strömungsgeschwindigkeit des Absaugluftstroms vom zum Anschluss entferntesten Bereich der zumindest einen Absaugöffnung in Richtung Anschluss zu. Durch die jeweilige Erstreckung zumindest des ersten und zweiten Bereiches in Längsrichtung der Absaugdüse lässt sich das Strömungsverhalten in dem zumindest einen Luftkanal flexibel anpassen.

Insbesondere kann sich der zweite Bereich in Längsrichtung im Wesentlichen über ein Drittel bis zur Hälfte der Längsausdehnung des zumindest einen Luftkanals erstrecken.

Gemäß einer Weiterbildung kann sich ein Profilabschnitt ausgehend von dem Anschluss abschnittsweise in Längsrichtung des Hohlkörpers erstrecken. Ein solcher Profilabschnitt kann dazu dienen, zusätzlichen Einfluss auf das Strömungsverhalten im Inneren des Hohlkörpers zu nehmen.

Insbesondere kann eine der Innenkontur zugewandte Oberseite des Profilabschnitts einen mit dem ersten Bereich des Luftkanals im Wesentlichen korrespondierenden Verlauf aufweisen.

Gemäß einer Weiterbildung kann die Absaugdüse, insbesondere genau, zwei Absaugöffnungen aufweisen, die in Längsrichtung hintereinander angeordnet und durch separate Luftkanäle mit dem Anschluss verbunden sind. Durch die erfindungsgemäß ausgeführten separaten Luftkanäle muss bei zwei Absaugöffnungen jeweils eine geringere Menge an am Sieb anhaftenden Partikeln durch den jeweiligen Absaugluftstrom abgefördert werden, wodurch der Fördereffekt zunimmt.

Insbesondere können die beiden Absaugöffnungen in Längsrichtung gesehen eine Erstreckung aufweisen, die jeweils im Wesentlichen der halben Längsausdehnung einer wirksamen Gesamtabsauglänge der Absaugdüse entspricht. Die Gesamtabsauglänge entspricht dabei im Wesentlichen der von der Absaugdüse überstrichenen radialen Erstreckung des Siebes, innerhalb der Partikel von der Oberfläche des Siebes abgesaugt werden.

Bevorzugt können die beiden Absaugöffnungen in Längsrichtung gesehen seitlich versetzt zueinander angeordnet sein. Insbesondere kann eine abschnittsweise Überlappung der beiden Absaugöffnungen vorgesehen sein. Durch die abschnittsweise Überlappung kann eine bessere Absaugung in einem sich in Längsrichtung der Absaugdüse gesehen ausbildenden Übergangsbereich zwischen den Absaugöffnungen erreicht werden.

Gemäß einer bevorzugten Weiterbildung können zwei Absaugdüsen einander gegenüberliegend angeordnet sein und einen gemeinsamen Anschluss aufweisen. Dabei kann der gemeinsame Anschluss koaxial zu einer zum Mittelpunkt des Siebes senkrecht verlaufenden gedachten Achse angeordnet sein.

Insbesondere kann der Anschluss im Wesentlichen mittig an dem Hohlkörper der Absaugdüse angeordnet sein, und es können ausgehend von dem mittig angeordneten Anschluss sich zu beiden Seiten spiegelbildlich ausgeführte Luftkanäle erstrecken, die eine durchgehende Absaugöffnung mit dem Anschluss verbunden sind. Dabei kann es sich um zwei Luftkanäle handeln, von denen sich jeweils einer ausgehend von dem mittig angeordneten Anschluss diametral nach außen erstreckt. Es können auch jeweils zwei Luftkanäle auf jeder Seite der Absaugdüse vorgesehen sein, die sich zumindest hintereinander und optional zusätzlich versetzt zueinander in Längsrichtung der Absaugdüse erstrecken. Durch die mittige Anordnung des Anschlusses kann der Luftförderweg verkürzt, insbesondere halbiert werden. Dabei ist der Anschluss zum Mittelpunkt des Siebes in radialer Richtung versetzt angeordnet.

Alternativ kann der Anschluss im Wesentlichen mittig an dem Hohlkörper der Absaugdüse angeordnet sein, und es können ausgehend von dem mittig angeordneten Anschluss sich zu beiden Seiten spiegelbildlich ausgeführte Luftkanäle erstrecken, die mehrere Absaugöffnungen mit dem Anschluss verbinden.

Gemäß einer Ausführungsform kann der Anschluss außermittig und sich im Wesentlichen senkrecht zu einer Seitenwandung des Hohlkörpers erstreckend angeordnet sein.

Bevorzugt kann das Sieb rotierend angetrieben sein und die zumindest eine Absaugdüse relativ zu dem Sieb feststehend angeordnet sein. Diese Anordnung ermöglicht eine Anordnung sowohl von beispielsweise zwei diametral angeordneten Absaugdüsen mit einem gemeinsamen Anschluss in der Mitte des Siebes als auch die Ausführungsform der Anordnung des Anschlusses mittig an dem Hohlkörper der Absaugdüse.

Alternativ kann das Sieb feststehend angeordnet sein und die Absaugdüse gegenüber dem Sieb relativbeweglich sein.

Weiterhin wird die eingangs gestellte Aufgabe durch eine selbstfahrende Erntemaschine gemäß dem Anspruch 15 gelöst.

Gemäß dem Anspruch 15 wird eine selbstfahrende Erntemaschine mit einer ein Sieb umfassenden Siebeinrichtung, vorgeschlagen, wobei dem Sieb eine Absaugdüse zugeordnet ist, deren zumindest eine im Wesentlichen schlitzförmige Absaugöffnung dem Sieb zugewandt positioniert ist, wobei die Siebeinrichtung nach einem der vorangehenden Ansprüche ausgebildet ist.

Die vorliegende Erfindung wird nachstehend anhand von in den Zeichnungen dargestellten Ausführungsbeispielen näher erläutert.

Es zeigen:
- Fig. 1: schematisch eine als Feldhäcksler ausgeführte selbstfahrende Erntemaschine
- Fig. 2: schematisch eine Ansicht einer Siebeinrichtung;
- Fig. 3: schematisch eine erste Ausführungsform einer Absaugdüse für eine Siebeinrichtung gemäß Fig. 2 im Längsschnitt;
- Fig. 4: schematisch eine weitere Ausführungsform einer Absaugdüse für eine Siebeinrichtung gemäß Fig. 2 im Längsschnitt;
- Fig. 5a, 5b: schematisch eine weitere Ausführungsform einer Absaugdüse für eine Siebeinrichtung gemäß Fig. 2 im Längsschnitt;
- Fig. 6: schematisch und stark vereinfacht die Absaugdüse gemäß Fig. 5a und 5b in einer Seitenansicht;
- Fig. 7: schematisch und stark vereinfacht eine weitere Ausführungsform einer Absaugdüse in einer Ansicht von unten;
- Fig. 8: schematisch und exemplarisch eine Ausführungsform, bei welcher zwei Absaugdüsen um eine gemeinsame Achse rotierend angeordnet sind; und
- Fig. 9: schematisch und exemplarisch eine weitere Ausführungsform einer Absaugdüse in perspektivischer Ansicht von unten.

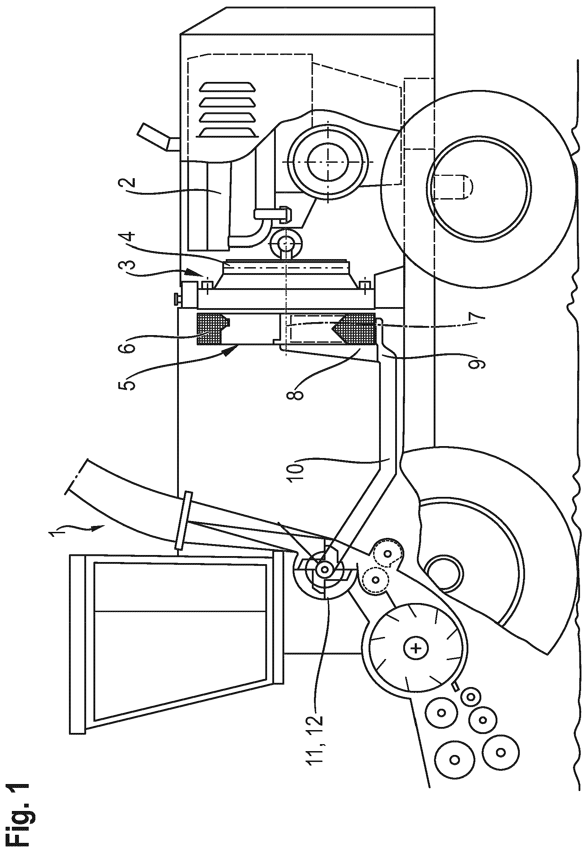

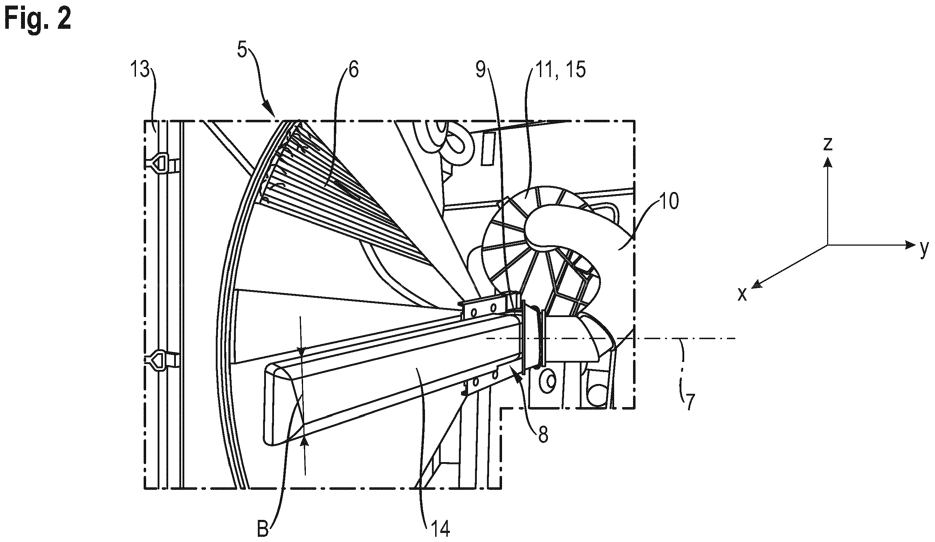

Fig. 1 zeigt exemplarisch und schematisch eine beispielhaft als Feldhäcksler ausgeführte selbstfahrende Erntemaschine 1. Die Erntemaschine 1 kann ebenso als ein selbstfahrender Mähdrescher ausgeführt sein. Die Erntemaschine 1 umfasst eine als Verbrennungsmotor ausgeführte Antriebseinheit 2, der eine Kühleinrichtung 3 zugeordnet ist. Die Kühleinrichtung 3 umfasst ein Sauggebläse 4, welches einen Kühlluftstrom durch eine Siebeinrichtung 5 ansaugt. Die Siebeinrichtung 5 weist ein Sieb 6 auf. Das Sieb 6 ist im dargestellten Ausführungsbeispiel um eine Achse 7 rotierend angetrieben. Die Siebeinrichtung 5 umfasst zumindest eine Absaugdüse 8. Die zumindest eine Absaufdüse 8 ist durch einen endseitig an dieser angeordneten Anschluss 9 mittels einer Zuleitung 10 mit einer Unterdruckquelle 11 verbunden. Im dargestellten Ausführungsbeispiel ist die Unterdruckquelle 11 bespielhaft als ein Nachbeschleuniger 12 der als Feldhäcksler ausgeführten selbstfahrenden Erntemaschine 1 ausgeführt, der wie ein Sauggebläse arbeitet. Die Unterdruckquelle 11 kann bevorzugt als ein separates Sauggebläse 15 ausgeführt sein, wie in Fig. 2 exemplarisch dargestellt, welches durch eine Steuereinheit, beispielsweise eine Antriebssteuereinheit, unabhängig vom Betriebszustand der Erntemaschine 1 regelbar ist.

In Fig. 2 ist schematisch eine Ansicht einer Siebeinrichtung 5 gemäß einer alternativen Ausführungsform dargestellt. Ein im Wesentlichen trichterförmiges Sieb 6 ist ortsfest an einem Rahmen 13 im Motorraum der Erntemaschine 1 angeordnet. Die zumindest eine Absaugdüse 8 ist um die Achse 7 rotierend angeordnet. Die zumindest eine Absaugdüse 8 weist einen länglichen Hohlkörper 14 mit zumindest einer Absaugöffnung 16 auf, die sich abschnittsweise in Längsrichtung x, d.h. bezogen auf die Achse 7 in radialer Richtung, und in Querrichtung y des Hohlkörpers 14 erstreckt. Die zumindest eine Absaugöffnung 16 ist durch zumindest einen Luftkanal 17 im Inneren des Hohlkörpers 14 mit dem an dem Hohlkörper 14 angeordneten Anschluss 9 zur Verbindung mit der Unterdruckquelle 11 verbunden. Die zumindest eine Absaugöffnung 16 ist dem Sieb 6 der Siebeinrichtung 5 zugewandt angeordnet. Die Absaugdüse 8 kann in Querrichtung y gesehen über ihre gesamte Länge eine im Wesentlichen konstante Breite B aufweisen.

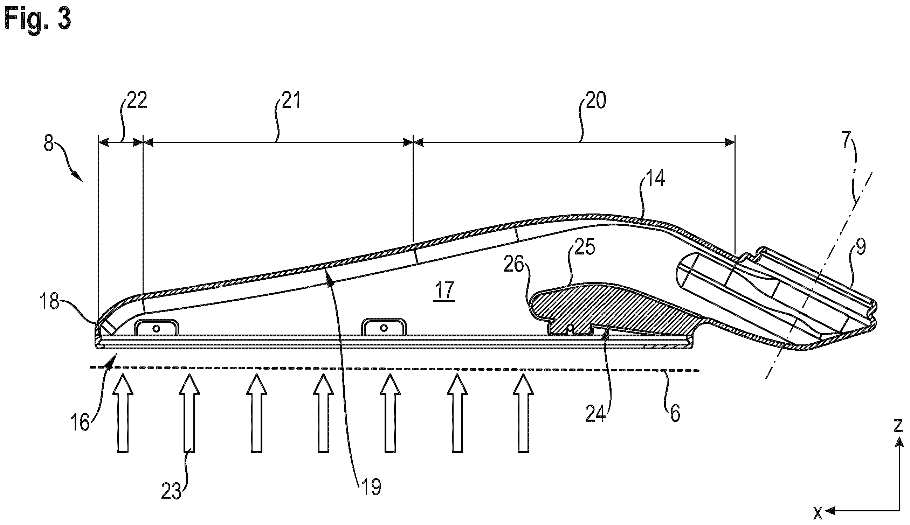

Die Darstellung in Fig. 3 zeigt eine erste Ausführungsform der Absaugdüse 8 der Siebeinrichtung 5 im Längsschnitt. Der Luftkanal 17 im Inneren des Hohlkörper 14 erstreckt sich von dem Anschluss 9, an dem die Zuleitung 10 angeordnet wird, bis zum äußeren Ende 18 der Absaugdüse 8. Der Hohlkörper 14 weist ausgehend von dem äußeren Ende 18 der Absaugdüse 8 in Längsrichtung x des Hohlkörpers 14 bis zu dem Anschluss 9 einen in Hochrichtung z des Hohlkörpers 14 zunehmenden Querschnittsverlauf auf. Eine der zumindest einen Absaugöffnung 16 zugewandte Innenkontur 19 des zumindest einen Luftkanals 17 weist eine im Wesentlichen einem Tragflächenprofil entsprechende Kontur auf. Die Innenkontur 19 ist der zu der zumindest einen Absaugöffnung 16 parallel verlaufende Bereich im Inneren des Hohlkörpers 14, durch den sich der Querschnittsverlauf in Hochrichtung z verändern lässt. Die einem Tragflächenprofil entsprechende Innenkontur 19 führt zu einer Variation des von dem Absaugluftstrom durchströmten Querschnitts im Inneren der Absaugdüse 8, so dass bei einem vorgegebenen Absaugluftvolumenstrom in einem zum Anschluss 9 weiter beabstandeten Abschnitt der zumindest einen Absaugöffnung 16 eine Erhöhung der Strömungsgeschwindigkeit des Absaugluftstroms bewirkt wird. Hierdurch kann eine Erhöhung der Absauggeschwindigkeit erreicht werden, ohne zugleich den Absaugluftvolumenstrom zu erhöhen. Die Funktionssicherheit der Kühleinrichtung 3 wird durch die verbesserte Absaugung des Siebes 6 erhöht.

Die Innenkontur 19 des zumindest einen Luftkanals 17 der Absaugdüse 8 weist ausgehend von dem Anschluss 9 zunächst einen ersten Bereich 20 mit einem abschnittsweise konvexen Verlauf auf, der in einen zweiten Bereich 21 mit einem abschnittsweise konkaven Verlauf übergeht und zu dem äußeren Ende 18 des Hohlkörpers 14 hin in einen dritten Bereich 22 mit einem konvexen Verlauf übergeht. Außenseitig kann die Absaugdüse 8 eine von der Innenkontur 19 abweichenden Konturenverlauf aufweisen.

Mit Pfeilen 23 ist die Ansaugrichtung eines Absaugluftstroms bezeichnet, in welcher die zumindest eine dem - lediglich angedeuteten - Sieb 6 der Siebeinrichtung 5 zugewandte Absaugöffnung 16 der Absaugdüse 8 den Absaugluftstrom zusammen mit Partikeln, die sich auf der Sieboberfläche ablagern, ein- bzw. absaugt. Die Erstreckung der Absaugöffnung 16 in Längsrichtung beschreibt die wirksame Gesamtabsauglänge der Absaugdüse 8, über welche die Sieboberfläche des Siebes 6 abgesaugt wird.

Im ersten Bereich 20 ist der vertikale Abstand zwischen der Absaugöffnung 16 und der Innenkontur 19 durch einen sich abschnittsweise in Längsrichtung x erstreckenden Profilabschnitt 24 reduziert. Der Profilabschnitt 24 erstreckt sich in Querrichtung y gesehen über die Breite der Absaugdüse 8. Der Profilabschnitt 24 bildet somit eine geschlossene Fläche, die sich in Querrichtung des Hohlkörpers 14 erstreckt.

Der Profilabschnitt 24 weist dabei eine mit dem Verlauf des ersten Bereichs 20 korrespondierende Kontur seiner der Innenkontur 19 zugewandten Oberseite 25 auf. Die Kontur der Oberseite 25 ist nach außen gewölbt, d.h. erstreckt sich in Richtung des ersten Bereichs 20 der Innenkontur 19. Ausgehend vom Bereich des Anschlusses 9 steigt der Verlauf der Kontur der Oberseite 25 zunächst an, um nach einem Wendepunkt abzufallen. Ein dem äußeren Ende 18 der Absaugdüse 8 zugewandter stirnseitiger Abschnitt 26 ist als eine Nase mit kleinem Krümmungsradius ausgeführt, um Verwirbelungen an dem stirnseitigen Abschnitt 26 zu minimieren oder zu vermeiden. Durch den Profilabschnitt 24 wird, über dessen abschnittsweise Erstreckung in Längsrichtung x, im ersten Bereich 20 eine Querschnittsreduzierung bewirkt, wodurch die Strömungsgeschwindigkeit des Absaugluftstroms zunächst zunimmt.

Unmittelbar hinter dem Profilabschnitt 24 kommt im es auslaufenden ersten Bereich 20 aufgrund der Zunahme des Abstands zwischen der Absaugöffnung 16 und der Innenkontur 19 zu einer sprunghaften Erweiterung des Querschnitts. Dadurch sinkt die Strömungsgeschwindigkeit des Absaugluftstroms.

In dem sich in Längsrichtung x gesehen anschließenden zweiten Bereich 21 nimmt der Querschnitt kontinuierlich ab, wodurch es zu einer Zunahme der Strömungsgeschwindigkeit des Absaugluftstroms kommt. Der zweite Bereich 21 erstreckt sich dabei in Längsrichtung x im Wesentlichen über ein Drittel bis zur Hälfte der Längsausdehnung des Luftkanals 17. Mit zunehmendem Abstand zu dem ersten Bereich 20 erhöht sich die Strömungsgeschwindigkeit des Absaugluftstroms, wodurch das Absaugen vom sich auf der Oberfläche des Siebes 6 ablagernden anhaftenden Partikeln, insbesondere im distalen Absaugbereich der Absaugdüse 8, verbessert wird.

Der dritte Bereich 22 bildet das äußere Ende 18 der Absaugdüse 8. Der dritte Bereich 22 ist der kürzeste und weist zudem den geringsten Querschnitt auf. Der konkave Verlauf des dritten Abschnitts 22 bildet eine stirnseitige Begrenzung des Hohlkörpers 14 aus. Hier wird der Absaugluftstrom vorrangig umgelenkt.

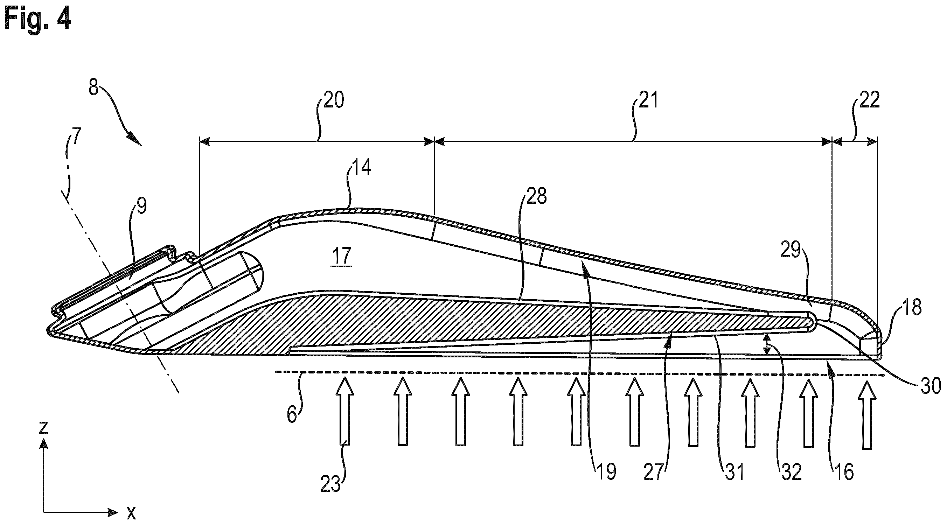

In Fig. 4 ist schematisch eine weitere Ausführungsform der Absaugdüse 8 für die Siebeinrichtung 5 gemäß Fig. 2 dargestellt. Die in Fig. 4 gezeigte Absaugdüse 8 ist in einer gegenüber der Darstellung gemäß Fig. 3 um 180° zur Hochrichtung z gedrehten Anordnung dargestellt. Der grundsätzliche Aufbau ist identisch mit der in Fig. 3 dargestellten Absaugdüse 8, so dass die dort verwendeten Bezugszeichen für identische Komponenten und Bauteile beibehalten werden. Gemäß dieser zweiten Ausführungsform der Absaugdüse 8 ist ein abweichend ausgeführter Profilabschnitt 27 vorgesehen. Der Profilabschnitt 27 erstreckt sich in Längsrichtung x nahezu über die gesamte Länge der der Absaugöffnung 16. Der Profilabschnitt 27 weist ebenfalls eine zunächst mit dem ersten Bereich 20 korrespondieren Verlauf der Kontur seiner der Innenkontur 19 zugewandten Oberseite 28 auf, welche im ersten Bereich 20 in einen im Wesentlichen zur Absaugöffnung 16 parallelen Verlauf übergeht. Der Profilabschnitt 27 erstreckt sich nahezu bis an das Ende des zweiten Bereichs 21 der Innenkontur 19, so dass eine spaltförmige, sich in Querrichtung y erstreckende Öffnung 29 verbleibt. Durch den zur Absaugöffnung 16 im Wesentlichen parallelen Verlauf der Oberseite 28 des Profilabschnittes 27 wird der durchströmte Querschnitt zwischen der Innenkontur 19 und der Oberseite 28 in Längsrichtung x kontinuierlich reduziert. Somit weist der Absaugluftstrom Übergang vom zweiten Bereich 21 in den dritten Bereich 22 sowie im dritten Bereich 22 die höchste Strömungsgeschwindigkeit auf.

Ein dem äußeren Ende 18 der Absaugdüse 8 zugewandter stirnseitiger Abschnitt 30 des Profilabschnitts 27 ist ebenfalls als eine Nase mit kleinem Krümmungsradius ausgeführt. Um den stirnseitigen Abschnitt 30 des Profilabschnitts 27 wird der durch die Absaugöffnung 16 angesaugte Absaugluftstrom umgelenkt. Mit seiner Unterseite 31 ist der Profilabschnitt 27 der Absaugöffnung 16 zugewandt. Die Kontur der Unterseite 31 des Profilabschnitts 27 weist, vom Anschluss 9 ausgehend gesehen, einen in Längsrichtung x im Wesentlichen rampenförmig ansteigenden Verlauf auf. Ein sich zwischen der Absaugöffnung 16 und der Unterseite 31 des Profilabschnitts 27 ausgebildeter Abstand 32 nimmt in Längsrichtung x zu. Durch die Ausgestaltung der Unterseite 31 des Profilabschnitts 27 wird erreicht, dass auch im dem Anschluss 9 zugewandten Bereich der Absaugdüse 8 eine adäquate Saugwirkung erreicht wird. Am Ende der Unterseite 31 im stirnseitigen Abschnitt 30 ist der Abstand 32 am größten. Der durch die Ausgestaltung des Profilabschnitts 27 im Übrigen erreichte Effekt entspricht im Wesentlichen dem gemäß der Ausführungsform gemäß Fig. 3. Die Absaugung erfolgt über die gesamte Längsausdehnung der Absaugöffnung 16 mit einem ungeteilten Absaugluftstrom.

Ausgehend von dem Anschluss 9 nimmt die Strömungsgeschwindigkeit des Absaugluftstromes in Längsrichtung x zwischen der Oberseite 28 des Profilabschnitts 27 und der Innenkontur 19 aufgrund der dem Tragflächenprofil entsprechende Kontur zu, während auf der Unterseite 30 des Profilabschnitts 27 ausgehend von dem dem Anschluss 9 nächstliegenden Bereich des Profilabschnitts 27 in Längsrichtung x eine Abnahme der Strömungsgeschwindigkeit des Absaugluftstromes durch den rampenförmigen Verlauf der Unterseite 30 bewirkt wird.

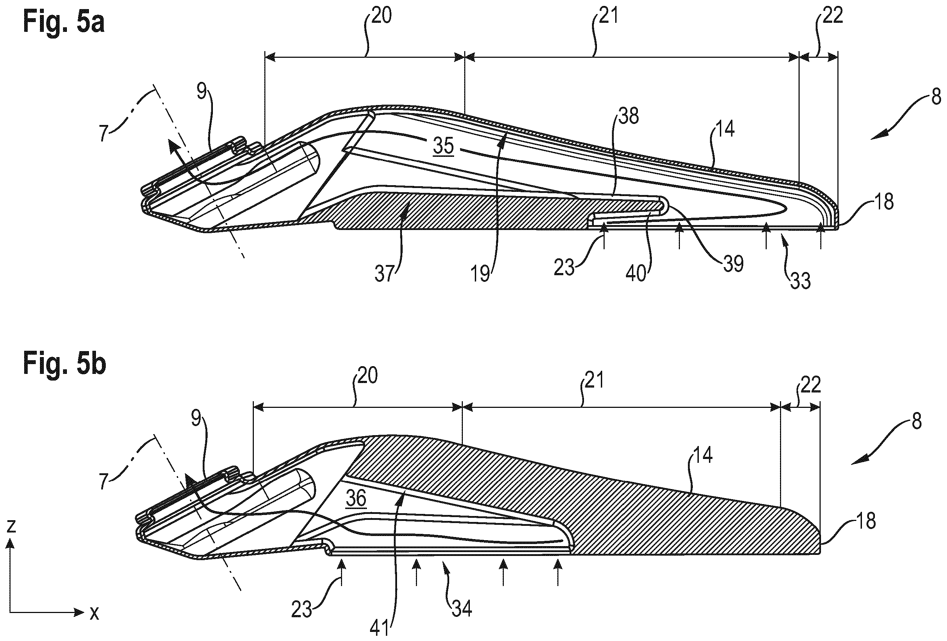

Die Darstellungen in Fig. 5a und 5b zeigen schematisch eine weitere Ausführungsform einer Absaugdüse 8 für eine Siebeinrichtung gemäß Fig. 2 im Längsschnitt. Die Schnittebenen sind dabei in Querrichtung y versetzt zueinander. So zeigt Fig. 5a einen in Querrichtung y weiter vorne liegenden Bereich und Fig. 5b einen in Querrichtung y weiter nach hinten versetzt liegenden Bereich der Absaugdüse 8. Die äußere Gestalt und Form der Absaugdüse 8 entspricht im Wesentlichen derjenigen der vorangehend beschriebenen und in den Fig. 2 bis 4 dargestellten Ausführungsformen der Absaugdüse 8.

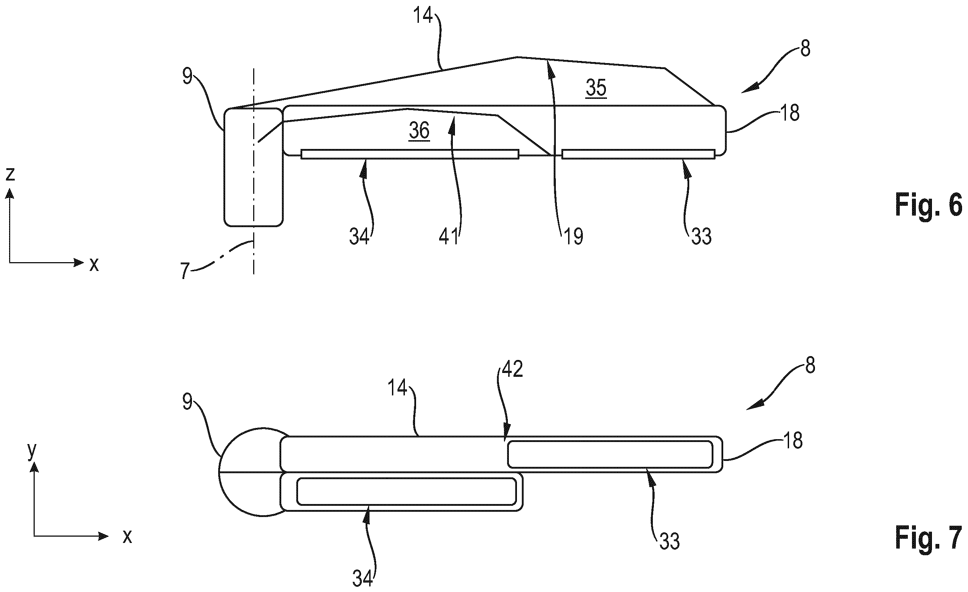

Die Absaugdüse 8 in Fig. 5a und 5b weist zwei Absaugöffnungen 33, 34 auf, welche in Längsrichtung x gesehen hintereinander angeordnet sind. Die beiden Absaugöffnungen 33, 34 erstrecken sich jeweils abschnittsweise in Längsrichtung x der Absaugdüse 8. Die beiden Absaugöffnungen 33, 34 können, wie in Fig. 6 schematisch dargestellt, zudem in Querrichtung y versetzt zueinander angeordnet sein.

Mit 33 ist eine vordere Absaugöffnung bezeichnet, deren Abstand zum Anschluss 9 in Längsrichtung x gesehen größer ist als der Abstand der hinteren Absaugöffnung 34. Die jeweilige Absaugöffnung 33, 34 weist in Längsrichtung x gesehen eine Erstreckung auf, die jeweils im Wesentlichen der halben Längsausdehnung einer wirksamen Gesamtabsauglänge der Absaugdüse 8 entspricht. Die Gesamtabsauglänge entspricht der von der Absaugdüse 8 überstrichenen radialen Erstreckung des Siebes 6, innerhalb der Partikel von der Oberfläche des Siebes 6 abgesaugt werden. Die Gesamtabsauglänge ist dabei geringer, als die Gesamtlänge der Absaugdüse 8.

Der Absaugluftstrom wird durch die Absaugdüse 8 aufgeteilt und durch zwei separate Luftkanäle 35, 36 geführt, welche jeweils eine der Absaugöffnung 33, 34 mit dem Anschluss 9 fluidleitend verbindet. Die Luftkanäle 35, 36 sind in Hochrichtung z gesehen in abschnittsweise voneinander abweichend verlaufenden, insbesondere übereinanderliegenden, Ebenen im Inneren der Absaugdüse 8 angeordnet.

In Fig. 5a ist die vordere Absaugöffnung 33, d.h. die sich von dem äußeren Ende 18 abschnittsweise in Richtung des Anschlusses 9 erstreckende Absaugöffnung 33, durch den Luftkanal 35 mit dem Anschluss 9 verbunden. Die der vorderen Absaugöffnung 33 zugewandte Innenkontur 19 der Absaugdüse 8 ist identisch mit derjenigen der vorangehend beschriebenen Ausführungsformen.

Der Luftkanal 35, der sich über die hintere Absaugöffnung 34 hinweg, d.h. die sich von dem Anschluss 9 bis zum Beginn der vorderen Absaugöffnung 33 erstreckende Absaugöffnung 34, erstreckt, verläuft bis zum äußeren Ende 18 der Absaugdüse 8. D.h. der Luftkanal 35 erstreckt sich über die gesamte Längsausdehnung der wirksamen Gesamtabsauglänge. Ausgehend von dem Anschluss 9 erstreckt sich ein nasenförmiger Profilabschnitt 37 in Richtung der vorderen Absaugöffnung 33 und überlappt diese abschnittsweise. Der Profilabschnitt 37 weist eine der Innenkontur 19 zugewandte Oberseite 38, einen dem äußeren Ende 18 der Absaugdüse 8 zugewandten stirnseitigen Abschnitt 39 sowie eine der vorderen Absaugöffnung 33 zugewandte Unterseite 40 auf.

Der Abstand zwischen dem stirnseitigen Abschnitt 39 und dem äußeren Ende 18 der der Absaugdüse 8 ist geringer als die Länge der vorderen Absaugöffnung 33. Die Unterseite 40 überlappt die vordere Absaugöffnung 33, wobei sich der Abstand zwischen der Unterseite 40 und der vorderen Absaugöffnung 33 in Längsrichtung x, zum äußeren Ende 18 hin vergrößert.

Gemäß der Fig. 5b ist die hintere Absaugöffnung 34, d.h. die sich von dem Anschluss 9 abschnittsweise in Richtung des äußeren Ende 18 erstreckende Absaugöffnung 34, durch den Luftkanal 36 mit dem Anschluss 9 verbunden. Der Luftkanal 36 erstreckt sich im Wesentlichen bis zum Beginn der vorderen Absaugöffnung 33, d.h. der dem Anschluss 9 zugewandten Seite der vorderen Absaugöffnung 33. Der Luftkanal 36 weist eine der hinteren Absaugöffnung 34 zugewandte Innenkontur 41 auf, die ebenfalls eine im Wesentlichen einem Tragflächenprofil entsprechende Kontur aufweist wie die Innenkontur 19 des Luftkanals 35.

Die gemäß der in den Fig. 5a und 5b dargestellten Ausführungsform ausgeführte Absaugdüse 8 weist somit zwei Luftkanäle 35, 36 unterschiedlicher Länge auf, so dass sich die Gutmenge an abzufördernden Partikeln im Absaugluftstrom aufteilt. Durch unterschiedliche Öffnungsquerschnitte der Luftkanäle 35, 36 im Bereich des Anschlusses 9 kann die Aufteilung des Absaugluftstroms zusätzlich beeinflusst werden. Dabei kann der Anteil des Absaugluftstroms, der durch die vordere Absaugöffnung 33 abgesaugt wird, größer sein als der Anteil, der durch die hintere Absaugöffnung 34 abgesaugt wird.

In Fig. 6 ist schematisch und stark vereinfacht, die Ausführungsform der Absaugdüse 8 gemäß Fig. 5a und 5b in einer Seitenansicht dargestellt. Die Erstreckung der vorderen Absaugöffnung 33 und/oder der hinteren Absaugöffnung 34 und ihrer jeweiligen Luftkanäle 35,36 kann derart gewählt sein, dass der Abstand im mittleren Bereich der Absaugdüse 8 zwischen diesen minimiert ist.

In Fig. 7 ist schematisch und stark vereinfacht, eine weitere Ausführungsform einer Absaugdüse 8 in einer Ansicht von unten dargestellt. Der Aufbau entspricht im Wesentlichen der Ausführungsform gemäß den Fig. 5a und 5b, wobei die Luftkanäle 35, 36, in Querrichtung y gesehen, hintereinander und nebeneinanderliegend angeordnet sind. Die jeweilige Erstreckung der hinteren Absaugöffnung 34 und der vorderen Absaugöffnung 33 kann derart gewählt sein, dass ein sich überlappender Absaugbereich 42 der beiden Absaugöffnungen 33, 34 im Wesentlichen in der Mitte der Ansaugdüse 8 ausbildet. Im Übrigen sind die Luftkanäle 35, 36 entsprechend der Ausführungsform gemäß den Fig. 5a und 5b ausgebildet.

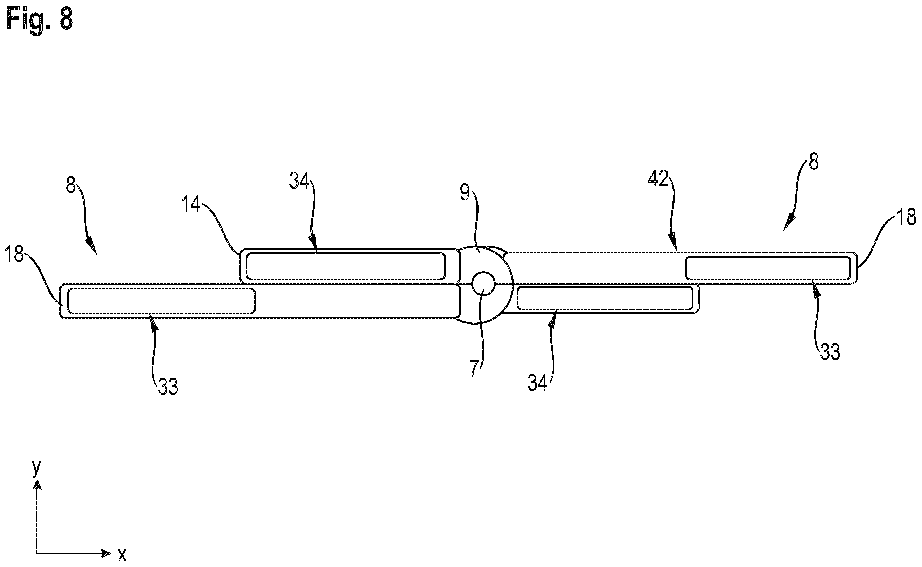

Fig. 8 zeigt schematisch und exemplarisch eine Ausführungsform, bei welcher zwei Absaugdüsen 8 gemeinsam um die Achse 7 rotierend angeordnet sind. Die Absaugdüsen 8 sind entsprechend der Ausführungsform gemäß Fig. 7 ausgebildet und einander gegenüberliegend, um 180° versetzt, angeordnet. Die Anschlüsse 9 der beiden Absaugdüsen 8 sind miteinander in der Weise verbunden, dass lediglich eine Zuleitung 10 im Wesentlichen koaxial zur Achse 7 anschließbar ist.

Gemäß einer weiteren Ausgestaltung kann der Anschluss 9 mittig an dem Hohlkörper 14 der Absaugdüse 8 angeordnet sein. Von dem mittig angeordneten Anschluss 9 können sich, spiegelbildlich ausgeführt, zu beiden Seiten Luftkanäle erstrecken, welche entsprechend der in Fig. 3 dargestellten Ausführungsform ausgeführt sind, jedoch jeweils eine Erstreckung in Querrichtung y aufweisen, die etwa der halben Länge des Luftkanals 17 entsprecht Eine singuläre Absaugöffnung erstreckt sich nahezu über die gesamte Erstreckung der Absaugdüse 8 in Längsrichtung und weist auch im Bereich des mittig angeordneten Anschlusses 9 keine Unterbrechung auf. Die beidseitig des Anschlusses 9 der durchgehenden Absaugöffnung zugewandten Innenkonturen des spiegelsymmetrisch ausgeführten Hohlkörpers weisen eine im Wesentlichen einem Tragflächenprofil entsprechende Kontur auf. Der zusätzliche Vorteil der mittigen Anordnung des mittig angeordneten Anschlusses 9 besteht darin, dass die Luftförderwege verkürzt sind. Diese Ausführungsform der Absaugdüse 8 ist insbesondere bei einem sich relativ zur Absaugdüse 8 bewegenden, insbesondere rotierenden, Sieb 6 sinnvoll.

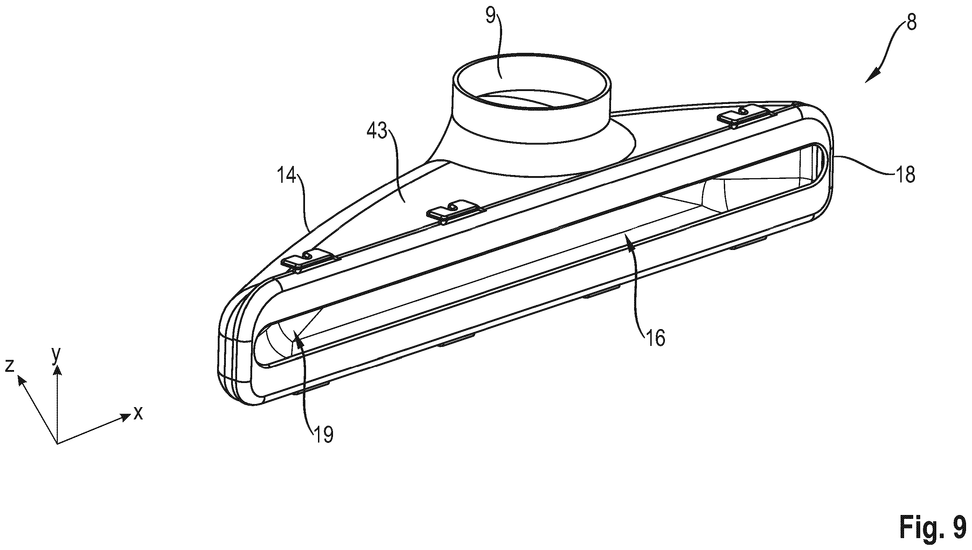

In Fig. 9 ist schematisch und exemplarisch eine weitere Ausführungsform einer Absaugdüse 8 in perspektivischer Ansicht von unten dargestellt. Diese Ausführungsform der Absaugdüse 8 unterscheidet sich von der in Fig. 3 dargestellten Ausführungsform zum einen durch die abweichende Anordnung des Anschlusses 9. Während der Anschluss 9 gemäß der Ausführungsform nach Fig. 3 am äußeren Ende des Hohlkörpers 14 angeordnet ist, ist bei der in Fig. 9 gezeigten Ausführungsform eine Positionierung des Anschlusses 9 im mittleren Bereich der Absaugdüse 8 vorgesehen. Zum anderen weist die Absaugdüse 8 keinen sich abschnittsweise in Längsrichtung x erstreckenden Profilabschnitt auf.

Der Anschluss 9 ist bezogen auf die Mitte der Absaugöffnung 16 der Absaugdüse 8 außermittig angeordnet. Insbesondere ist der Anschluss 9 näher am äußeren Ende 18 des Hohlkörpers 14 angeordnet. Zudem ist der Anschluss 9 im Wesentlichen senkrecht zum Verlauf der Innenkontur 19 angeordnet, d.h. der Anschluss 9 ist an einer Seitenwandung 43 an der Außenseite des Hohlkörpers 14 ausgebildet. Die außermittige Anordnung des Anschlusses 9 gemäß dieser Ausführungsform hat den Vorteil, dass die Absauggeschwindigkeit im distalen Bereich der Absaugdüse 8 erhöht ist. Dadurch wird, bezogen auf den Mittelpunkt des Siebes 6, in den radial entfernteren Bereichen des Siebes 6 das Ablösen von Anhaftungen verbessert. Zudem wird bei dieser Ausführungsform eine gleichmäßige Absauggeschwindigkeit in Längsrichtung x der Absaugdüse 8 erreicht.

### Bezugszeichenliste

| | | | |
|---|---|---|---|
| 1 | Erntemaschine | 34 | Absaugöffnung |
| 2 | Antriebseinheit | 35 | Luftkanal |
| 3 | Kühleinrichtung | 36 | Luftkanal |
| 4 | Sauggebläse | 37 | Profilabschnitt |
| 5 | Siebeinrichtung | 38 | Oberseite |
| 6 | Sieb | 39 | Stirnseitiger Abschnitt |
| 7 | Achse | 40 | Unterseite |
| 8 | Absaugdüse | 41 | Innenkontur |
| 9 | Anschluss | 42 | Absaugbereich |
| 10 | Zuleitung | 43 | Seitenwandung |
| 11 | Unterdruckquelle | B | Breite |
| 12 | Nachbeschleuniger | x | Längsrichtung |
| 13 | Rahmen | y | Querrichtung |
| 14 | Hohlkörper | z | Hochrichtung |
| 15 | Sauggebläse | | |
| 16 | Absaugöffnung | | |
| 17 | Luftkanal | | |
| 18 | Äußeres Ende von 8 | | |
| 19 | Innenkontur | | |
| 20 | Ersten Bereich | | |
| 21 | Zweiten Bereich | | |
| 22 | Dritten Bereich | | |
| 23 | Ansaugrichtung | | |
| 24 | Profilabschnitt | | |
| 25 | Oberseite | | |
| 26 | Stirnseitiger Abschnitt | | |
| 27 | Profilabschnitt | | |
| 28 | Oberseite | | |
| 29 | Öffnung | | |
| 30 | Stirnseitiger Abschnitt | | |
| 31 | Unterseite | | |
| 32 | Abstand | | |
| 33 | Absaugöffnung | | |

## Patentansprüche

1. Siebeinrichtung (5) mit zumindest einer Absaugdüse (8), welche einen länglichen Hohlkörper (14) mit zumindest einer Absaugöffnung (16, 33, 34), die sich abschnittsweise in Längsrichtung (x) und Querrichtung (y) des Hohlkörpers (14) erstreckt, und durch zumindest einen Luftkanal (17, 35, 36) im Inneren des Hohlkörpers (14) mit einem an dem Hohlkörper (14) angeordneten Anschluss (9) zur Verbindung mit einer Unterdruckquelle (4, 15) verbunden ist, aufweist, wobei die zumindest eine Absaugöffnung (16, 33, 34) einem Sieb (6) der Siebeinrichtung (5) zugewandt angeordnet ist, **dadurch gekennzeichnet, dass** der zumindest eine Luftkanal (17, 35, 36) ausgehend von einem äußeren Ende (18) der Absaugdüse (8) in Richtung des Anschlusses (9) einen in Hochrichtung (z) zunehmenden Querschnittsverlauf aufweist, wobei eine der zumindest einen Absaugöffnung (16, 33, 34) zugewandte Innenkontur (19, 41) des zumindest einen Luftkanals (17, 35, 36) eine im Wesentlichen einem Tragflächenprofil entsprechende Kontur aufweist, wobei die einem Tragflächenprofil entsprechende Innenkontur (19, 41) zu einer Variation des von einem Absaugluftstrom durchströmten Querschnitts im Inneren der Absaugdüse (8) führt, so dass bei einem vorgegebenen Absaugluftvolumenstrom in einem zum Anschluss (9) weiter beabstandeten Abschnitt der zumindest einen Absaugöffnung (16, 33, 34) eine Erhöhung der Strömungsgeschwindigkeit des Absaugluftstroms bewirkt wird.

2. Siebeinrichtung (5) nach Anspruch 1, **dadurch gekennzeichnet, dass** die Innenkontur (19, 41) des zumindest einen Luftkanals (17, 35, 36) ausgehend von dem Anschluss (9) zunächst einen ersten Bereich (20) mit einem abschnittsweise konvexen Verlauf aufweist, der in einen zweiten Bereich (21) mit einem abschnittsweise konkaven Verlauf übergeht und zu dem äußeren Ende (18) des Hohlkörpers (14) hin in einen dritten Bereich (22) mit einem konvexen Verlauf übergeht.

3. Siebeinrichtung (5) nach Anspruch 2, **dadurch gekennzeichnet, dass** sich der zweite Bereich (21) in Längsrichtung (x) im Wesentlichen über ein Drittel bis zur Hälfte der Längsausdehnung zumindest einen Luftkanals (17, 35, 36) erstreckt.

4. Siebeinrichtung (5) nach einem der Ansprüche 1 bis 3, **dadurch gekennzeichnet, dass** sich ein Profilabschnitt (24, 27, 37) ausgehend von dem Anschluss (9) abschnittsweise in Längsrichtung (x) des Hohlkörpers (14) erstreckt.

5. Siebeinrichtung (5) nach Anspruch 4, **dadurch gekennzeichnet, dass** eine der Innenkontur (19, 41) zugewandte Oberseite (25, 28, 38) des Profilabschnitts (24, 27, 37) einen mit dem ersten Bereich (20) im Wesentlichen korrespondierenden Verlauf aufweist.

6. Siebeinrichtung (5) nach einem der Ansprüche 1 bis 5, **dadurch gekennzeichnet, dass** die Absaugdüse (8) zwei Absaugöffnungen (33, 34) aufweist, die in Längsrichtung (x) hintereinander angeordnet und durch separate Luftkanäle (35, 36) mit dem Anschluss (9) verbunden sind.

7. Siebeinrichtung (5) nach Anspruch 6, **dadurch gekennzeichnet, dass** die beiden Absaugöffnungen (33, 34) in Längsrichtung (x) gesehen eine Erstreckung aufweisen, die jeweils im Wesentlichen der halben Längsausdehnung einer wirksamen Gesamtabsauglänge der Absaugdüse (8) entspricht.

8. Siebeinrichtung (5) nach Anspruch 6 oder 7, **dadurch gekennzeichnet, dass** die beiden Absaugöffnungen (33, 34) in Längsrichtung (x) gesehen seitlich versetzt zueinander angeordnet sind.

9. Siebeinrichtung (5) nach einem der vorangehenden Ansprüche, **dadurch gekennzeichnet, dass** zwei Absaugdüsen (8) einander gegenüberliegend angeordnet sind und einen gemeinsamen Anschluss (9) aufweisen.

10. Siebeinrichtung (5) nach einem der Ansprüche 1 bis 8, **dadurch gekennzeichnet, dass** der Anschluss (9) im Wesentlichen mittig an dem Hohlkörper (14) der Absaugdüse (8) angeordnet ist, und dass ausgehend von dem mittig angeordneten Anschluss (9) sich zu beiden Seiten spiegelbildlich ausgeführte Luftkanäle (17) erstrecken, die eine durchgehende Absaugöffnung (16) mit dem Anschluss (9) verbinden.

11. Siebeinrichtung (5) nach einem der Ansprüche 1 bis 8, **dadurch gekennzeichnet, dass** der Anschluss (9) im Wesentlich mittig an dem Hohlkörper (14) der Absaugdüse (8) angeordnet ist, und dass ausgehend von dem mittig angeordneten Anschluss (9) sich zu beiden Seiten spiegelbildlich ausgeführte Luftkanäle (17, 35, 36) erstrecken, die mehrere Absaugöffnungen (16, 33, 34) mit dem Anschluss (9) verbinden.

12. Siebeinrichtung (5) nach einem der Ansprüche 1 bis 5, **dadurch gekennzeichnet, dass** der Anschluss (9) außermittig und sich im Wesentlichen senkrecht zu einer Seitenwandung (43) des Hohlkörpers (14) erstreckend angeordnet ist.

13. Siebeinrichtung (5) nach einem der vorangehenden Ansprüche, **dadurch gekennzeichnet, dass** das Sieb (6) rotierend angetrieben ist und die Absaugdüse (8) relativ zu dem Sieb (6) feststehend angeordnet ist.

14. Siebeinrichtung (5) nach einem der vorangehenden Ansprüche, **dadurch gekennzeichnet, dass** das Sieb (6) feststehend angeordnet ist und die Absaugdüse (8) gegenüber dem Sieb (6) relativbeweglich ist.

15. Selbstfahrende Erntemaschine (1) mit einer ein Sieb (6) umfassenden Siebeinrichtung (5), wobei dem Sieb (6) eine Absaugdüse (8) zugeordnet ist, deren zumindest eine im Wesentlichen schlitzförmige Absaugöffnung (16, 33, 34) dem Sieb (6) zugewandt positioniert ist, **dadurch gekennzeichnet, dass** die Siebeinrichtung (5) nach einem der vorangehenden Ansprüche ausgebildet ist.

## Claims

1. Screening device (5) with at least one suction nozzle (8) which has an elongated hollow body (14) with at least one suction opening (16, 33, 34) which partially extends in the longitudinal direction (x) and transverse direction (y) of the hollow body (14) and is connected by at least one air duct (17, 35, 36) in the interior of the hollow body (14) to a port (9) arranged on the hollow body (14) for connection to a vacuum source (4, 15), wherein the at least one suction opening (16, 33, 34) is arranged facing a screen (6) of the screening device (5), **characterized in that** the at least one air duct (17, 35, 36), starting from an outer end (18) of the suction nozzle (8) in the direction of the port (9), has a cross-sectional profile increasing in the vertical direction (z), wherein an inner contour (19, 41) of the at least one air duct (17, 35, 36) facing the at least one suction opening (16, 33, 34) has a contour substantially corresponding to an airfoil profile, wherein the inner contour (19, 41) corresponding to an airfoil profile leads to a variation of the cross section, through which a suction air flow passes, in the interior of the suction nozzle (8), so that, at a predetermined suction air volume flow in a portion of the at least one suction opening (16, 33, 34) spaced further apart from the port (9), an increase in the flow velocity of the suction air flow is brought about.

2. Screening device (5) according to Claim 1, **characterized in that** the inner contour (19, 41) of the at least one air duct (17, 35, 36), starting from the port (9), first of all has a first region (20) with a partially convex profile, which merges into a second region (21) with a partially concave profile and, towards the outer end (18) of the hollow body (14), merges into a third region (22) with a convex profile.

3. Screening device (5) according to Claim 2, **characterized in that** the second region (21) extends in the longitudinal direction (x) substantially over one third to half of the longitudinal extent of the at least one air duct (17, 35, 36).

4. Screening device (5) according to any one of Claims 1 to 3, **characterized in that** a profile portion (24, 27, 37), starting from the port (9), partially extends in the longitudinal direction (x) of the hollow body (14).

5. Screening device (5) according to Claim 4, **characterized in that** an upper side (25, 28, 38) of the profile portion (24, 27, 37) facing the inner contour (19, 41) has a profile substantially corresponding to the first region (20).

6. Screening device (5) according to any one of Claims 1 to 5, **characterized in that** the suction nozzle (8) has two suction openings (33, 34) which are arranged consecutively in the longitudinal direction (x) and are connected to the port (9) by separate air ducts (35, 36).

7. Screening device (5) according to Claim 6, **characterized in that** the two suction openings (33, 34), as seen in the longitudinal direction (x), have an extent, which in each case substantially corresponds to half the longitudinal extent of an effective overall suction length of the suction nozzle (8).

8. Screening device (5) according to Claim 6 or 7, **characterized in that** the two suction openings (33, 34), as seen in the longitudinal direction (x), are laterally offset from each other.

9. Screening device (5) according to any one of the preceding claims, **characterized in that** two suction nozzles (8) are arranged opposite each other and have a common port (9).

10. Screening device (5) according to any one of Claims 1 to 8, **characterized in that** the port (9) is arranged substantially centrally on the hollow body (14) of the suction nozzle (8), and **in that**, starting from the centrally arranged port (9), air ducts (17) of mirror-inverted design extend on both sides and connect a continuous suction opening (16) to the port (9).

11. Screening device (5) according to any one of Claims 1 to 8, **characterized in that** the port (9) is arranged substantially centrally on the hollow body (14) of the suction nozzle (8), and **in that**, starting from the centrally arranged port (9), air ducts (17, 35, 36) of mirror-inverted design extend on both sides and connect a plurality of suction openings (16, 33, 34) to the port (9).

12. Screening device (5) according to any one of Claims 1 to 5, **characterized in that** the port (9) is arranged eccentrically and extending substantially perpendicular to a side wall (43) of the hollow body (14).

13. Screening device (5) according to any one of the preceding claims, **characterized in that** the screen (6) is rotationally driven and the suction nozzle (8) is fixed relative to the screen (6).

14. Screening device (5) according to any one of the preceding claims, **characterized in that** the screen (6) is fixed and the suction nozzle (8) is movable in relation to the screen (6).

15. Self-propelled harvester (1) with a screening device (5) comprising a screen (6), wherein the screen (6) is assigned a suction nozzle (8), at least one substantially slot-shaped suction opening (16, 33, 34) of which is positioned facing the screen (6), **characterized in that** the screening device (5) is designed according to any one of the preceding claims.

## Revendications

1. Dispositif de tamisage (5) comprenant au moins une buse d'aspiration (8), laquelle présente un corps creux allongé (14) avec au moins une ouverture d'aspiration (16, 33, 34), qui s'étend par sections dans la direction longitudinale (x) et dans la direction transversale (y) du corps creux (14), et est reliée, par au moins un canal d'air (17, 35, 36) à l'intérieur du corps creux (14), à un raccord (9) disposé sur le corps creux (14) pour une liaison à une source de dépression (4, 15), l'au moins une ouverture d'aspiration (16, 33, 34) étant disposée tournée vers un tamis (6) du dispositif de tamisage (5), **caractérisé en ce que** l'au moins un canal d'air (17, 35, 36) présente, à partir d'une extrémité extérieure (18) de la buse d'aspiration (8) en direction du raccord (9), une évolution de section augmentant dans la direction de hauteur (z), un contour intérieur (19, 41) de l'au moins un canal d'air (17, 35, 36), tourné vers l'au moins une ouverture d'aspiration (16, 33, 34), présentant un contour correspondant essentiellement à un profil d'aile portante, le contour intérieur (19, 41) correspondant à un profil d'aile portante conduisant à une variation de la section traversée par un flux d'air d'aspiration à l'intérieur de la buse d'aspiration (8), de sorte que, pour un débit volumique d'air d'aspiration prédéfini, une augmentation de la vitesse d'écoulement du flux d'air d'aspiration soit provoquée dans une section de l'au moins une ouverture d'aspiration (16, 33, 34) plus éloignée du raccord (9).

2. Dispositif de tamisage (5) selon la revendication 1, **caractérisé en ce que** le contour intérieur (19, 41) de l'au moins un canal d'air (17, 35, 36), à partir du raccord (9), présente d'abord un premier domaine (20) avec un profil convexe par sections, lequel passe dans un deuxième domaine (21) avec un profil concave par sections et passe, vers l'extrémité extérieure (18) du corps creux (14), dans un troisième domaine (22) avec un profil convexe.

3. Dispositif de tamisage (5) selon la revendication 2, **caractérisé en ce que** la deuxième zone (21) s'étend dans la direction longitudinale (x) essentiellement sur un tiers à la moitié de l'étendue longitudinale d'au moins un canal d'air (17, 35, 36).

4. Dispositif de tamisage (5) selon l'une des revendications 1 à 3, **caractérisé en ce qu'**une section de profil (24, 27, 37) s'étend par sections, à partir du raccord (9), dans la direction longitudinale (x) du corps creux (14).

5. Dispositif de tamisage (5) selon la revendication 4, **caractérisé en ce qu'**une face supérieure (25, 28, 38) de la section de profil (24, 27, 37), tournée vers le contour intérieur (19, 41), présente un profil correspondant essentiellement au premier domaine (20).

6. Dispositif de tamisage (5) selon l'une des revendications 1 à 5, **caractérisé en ce que** la buse d'aspiration (8) présente deux ouvertures d'aspiration (33, 34), qui sont disposées l'une derrière l'autre dans la direction longitudinale (x) et sont reliées au raccord (9) par des canaux d'air séparés (35, 36).

7. Dispositif de tamisage (5) selon la revendication 6, **caractérisé en ce que** les deux ouvertures d'aspiration (33, 34) présentent, vues dans la direction longitudinale (x), une étendue correspondant chacune essentiellement à la moitié de l'étendue longitudinale d'une longueur d'aspiration totale efficace de la buse d'aspiration (8).

8. Dispositif de tamisage (5) selon la revendication 6 ou 7, **caractérisé en ce que** les deux ouvertures d'aspiration (33, 34), vues dans la direction longitudinale (x), sont disposées décalées latéralement l'une par rapport à l'autre.

9. Dispositif de tamisage (5) selon l'une des revendications précédentes, **caractérisé en ce que** deux buses d'aspiration (8) sont disposées en vis-à-vis l'une de l'autre et présentent un raccord commun (9).

10. Dispositif de tamisage (5) selon l'une des revendications 1 à 8, **caractérisé en ce que** le raccord (9) est disposé sensiblement au centre du corps creux (14) de la buse d'aspiration (8), et qu'à partir du raccord (9) disposé au centre s'étendent, des deux côtés, des canaux d'air (17) réalisés de manière symétrique en miroir, qui relient une ouverture d'aspiration continue (16) au raccord (9).

11. Dispositif de tamisage (5) selon l'une des revendications 1 à 8, **caractérisé en ce que** le raccord (9) est disposé essentiellement au centre du corps creux (14) de la buse d'aspiration (8), et **en ce qu'**à partir du raccord (9) disposé au centre s'étendent des canaux d'air (17, 35, 36) réalisés de manière symétrique de part et d'autre, lesquels relient plusieurs ouvertures d'aspiration (16, 33, 34) au raccord (9).

12. Dispositif de tamisage (5) selon l'une des revendications 1 à 5, **caractérisé en ce que** le raccord (9) est disposé de manière excentrée et en s'étendant essentiellement perpendiculairement à une paroi latérale (43) du corps creux (14).

13. Dispositif de tamisage (5) selon l'une des revendications précédentes, **caractérisé en ce que** le tamis (6) est entraîné en rotation et **en ce que** la buse d'aspiration (8) est disposée de manière fixe par rapport au tamis (6).

14. Dispositif de tamisage (5) selon l'une des revendications précédentes, **caractérisé en ce que** le tamis (6) est disposé de manière fixe et **en ce que** la buse d'aspiration (8) est mobile de manière relative par rapport au tamis (6).

15. Machine de récolte automotrice (1) comprenant un dispositif de tamisage (5) comportant un tamis (6), une buse d'aspiration (8) étant associée au tamis (6), dont au moins une ouverture d'aspiration (16, 33, 34) essentiellement en forme de fente est positionnée de manière à être tournée vers le tamis (6), **caractérisée en ce que** le dispositif de tamisage (5) est réalisé selon l'une des revendications précédentes.
